Europäisches Patentamt

European Patent Office

Office européen des brevets

(19)

(11) Publication number: **0 241 442**
**A2**

## (12) EUROPEAN PATENT APPLICATION

(21) Application number: **87850113.9**

(22) Date of filing: **07.04.87**

(51) Int. Cl.⁴: **D 21 G 1/00**
**D 21 G 1/02, F 16 C 13/00**

(30) Priority: **09.04.86 FI 861511**

(43) Date of publication of application:
**14.10.87 Bulletin 87/42**

(84) Designated Contracting States: **AT DE FR GB SE**

(71) Applicant: **Valmet Oy**
**Punanotkonkatu 2**
**SF-00130 Helsinki 13 (FI)**

(72) Inventor: **Niskanen Juhani**
**Välitie 1 as.2**
**SU-40530 Jyväskylä (FI)**

(74) Representative: **Rostovanyi, Peter et al**
**AWAPATENT AB Box 5117**
**S-200 71 Malmö (SE)**

(54) **Method for controlling the deflection of an adjustable-crown roll as well as a paper machine roll wherein the method is applied.**

(57) Method for the unification of the form of the deflection lines of the roll mantles (13,23) at the nip (N) formed by an adjustable-crown roll (10) with its counter-roll (20). The bearing spacing ($L_0$) of the said counter-roll (20) is substantially larger than the corresponding bearing spacing ($L_1$) of the adjustable-crown roll (10). The load in the nip (N) between the rolls (10,20) is produced by means of load forces (F) which are effective facing the bearings (22a,22b) of the counter-roll (20). In the method, by means of devices fitted inside the bearing spacing ($L_1$) of the mantle (13) of the adjustable-crown roll (10) and inside the mantle (13), a compensation moment ($M_k$) is produced which loads both of the end regions of the roll mantle (13), the magnitude of the said moment ($M_k$) being arranged by means of a compensation force ($F_k$) such that the roll mantles (13,23) will have substantially uniform deflection lines at the nip (N) between the counter-roll (20) and the adjustable-crown roll (10).

FIG. 1

## Description

Method for controlling the deflection of an adjustable-crown roll as well as a paper machine roll wherein the method is applied

The subject of the present invention is a method for the unification of the form of the deflection lines of the roll mantles at the nip formed by an adjustable-crown roll with its counter-roll, the bearing spacing of the said counter-roll being substantially larger than the corresponding bearing spacing of the adjustable-crown roll,and the load in the nip between the said rolls being produced by means of load forces which are preferably effective facing the bearings of the counter-roll.

A further subject of the invention is an adjustable-crown roll making use of the method of the invention, which said roll comprises a massive central axle and a roll mantle arranged revolving on the said axle, a glide-shoe-loading-piston device or a corresponding pressure-fluid chamber or a series of same being fitted in the space between the said central axle and the said mantle, by means of which said glide-shoe-loading-piston device or equivalent it is possible to adjust the profile of the nip formed by the said roll with its counter-roll and which said glide-shoe-piston device or equivalent is fitted at the plane of the said nip and which said roll mantle is journalled revolving at the proximity of both of its ends by means of bearings on the said stationary axle, and which said stationary axle is supported from outside the journalling points of the roll mantle by means of articulation bearings.

In paper machines, such rolls are commonly used as form a dewatering press nip, a smoothing nip, or a calendering nip with a counter-roll. In these purposes of use it is important that the distribution of the linear load, i.e. the profile of the nip in the axial direction of the rolls can be made constant or that this profile can be adjusted as desired, e.g. so as to control the transverse moisture profile and/or thickness profile (caliper) of the web. For this purpose, various variable-crown or adjustable-crown rolls are known in prior art (in the following, the designation variable-crown roll will be used for both of them), attempts being made to act upon the distribution of the linear load in a nip by means of the said rolls.

In prior art, several different variable-crown rolls for paper machines are known. As a rule, these rolls comprise a massive or tubular, stationary roll axle and a roll mantle arranged as revolving around the said axle. Between the said axle and the mantle, acting upon the inner face of the mantle, glide-shoe arrangements and/or a pressure-fluid chamber or a series of chambers are fitted so that the axial profile of the mantle at the nip can be aligned or adjusted as desired. As a rule, the nips formed by such rolls, such as press nips or calendering nips, are loaded by means of load forces applied to the axle journals of the variable-crown roll and of its counter-roll.

In respect of the prior art most closely related to the present invention, reference is made to the following patent literature: FI Pat. Appl. No. 822,393, FI Published Patent Applications Nos. 67,923 and 69,913, and US Pat. No. 3,097,590.

As a rule, the counter-roll of the variable-crown roll has revolving axle journals permanently fixed to the roll mantle, the roll being journalled by means of the said axle journals. On the other hand, the variable-crown roll is journalled on a stationary massive axle. The bearing spacings on the counter-roll and on the variable-crown roll are usually different, so that the bearing spacing on the variable-crown roll is substantially smaller than the bearing spacing on the counter-roll. This results in certain drawbacks, which will be discussed below in more detail with reference to the attached Figure A.

As is known in prior art, attempts have been made to resolve the difference in the deflection forms of the mantles of the counter-roll and the variable-crown roll, resulting from the different bearing spacings, e.g., by the following means. The rolls are crowned, but by this means a uniform nip profile is obtained with one linear load only. In particular in calender rolls, heating devices have been used by means of which the roll mantle is heated relative the environment at the portions at which a higher linear load is desired. This method also has its limitations and drawbacks. In the variable-crown roll, an extended bearing spacing is used, which solution transfers the problems to the frame structures of the paper machine. It is also known in prior art to use an articulation bearing and a rolling bearing placed one above the other in the journalling of a variable-crown roll and a counter-roll. This prior-art solution requires an abundance of space. In prior art, so-called self-acting counter-moment rolls are also known.

It is known in prior art to use a variable-crown roll provided with an extended mantle, so that the bearing spacings on the variable-crown roll and on the counter-roll become equal. In this way a deflection line is obtained for the variable-crown roll which corresponds to the deflection line of the counter-roll, from which it again follows that the caliper profile of the nip formed by the variable-crown roll and by the counter-roll is substantially even (attached Fig. D). This prior-art solution is illustrated by the attached Figure B, which will be returned to below. The said extending of the mantle, however, results in numerous drawbacks, which will also be discussed in more detail below.

The object of the present invention is to provide a novel solution for the problems discussed above, so that the problems coming out above can be largely avoided.

In view of achieving the objectives stated above and those that will come out below, the method of the invention is mainly characterized in that, in the method, by means of devices fitted inside the bearing spacing of the mantle of the adjustable-crown roll and inside the mantle, a compensation moment is produced which loads both of the end regions of the roll mantle, the magnitude of the said moment being arranged by means of a compensation force such that the roll mantles will have substantially uniform deflection lines at the nip between the counter-roll and the adjustable-crown roll.

The roll in which the method of the invention is applied is mainly characterized in that annular parts are attached to both ends of the said roll mantle, which said annular parts are provided with a sleeve-shaped or ring-flange-shaped projection part, a glide shoe device or glide shoe devices placed at opposite sides of the roll axle being fitted as acting upon the glide face of the said projection part, and that the said glide shoe devices are arranged so as to be loaded by means of a cylinder-piston combination or equivalent, which is fitted so as to act between the said glide shoe and the said central axle.

According to the invention, without an extension of the mantle of the variable-crown roll, the missing moment adjustable to the correct magnitude can be produced at the ends of the mantle by using a sleeve, flange or any other, corresponding part inside the roll mantle, which said part is pressed, e.g., by means of a loading-shoe arrangement, by means of which the said compensating moment is produced without interfering with the loading of the nip.

According to the invention, the said moment equalizing the nip profile can be produced by means of hydrostatic or equivalent glide shoes similar to those used otherwise in variable-crown rolls for controlling the deflection of the roll.

In the following, the problems constituting a starting point of the invention and the prior-art related to the invention as well as preferred embodiments of the invention will be described with reference to the figures in the attached drawing, whereat the invention is by no means strictly confined to the details of the said illustrations.

Figure A shows a prior-art nip formed by a variable-crown roll and a counter-roll, in which the bearing spacings are dissimilar.

Figure B shows a prior-art nip between a variable-crown roll and a counter-roll, in which the mantle of the variable-crown roll has been extended by means of end sleeves and in which similar bearing spacings have been obtained for the rolls.

Figure C illustrates the caliper profile of the nip shown in Fig. A in the cross-machine direction.

Figure D illustrates the caliper profile of the nip shown in Fig. B in a way corresponding to Fig. C.

Figure 1 illustrates the variable-crown roll making use of the method of the invention as well as the nip formed by the said roll with its counter-roll.

Figure 2 is an enlarged view of a first embodiment of the invention, whose principle also comes out from Fig. 1.

Figure 3 shows a second embodiment of the roll in accordance with the invention in a way corresponding to Fig. 2.

At the beginning, with reference to Figures A,B,C and D, the problems constituting a starting point of the invention and the prior art related to the invention will be described. As is shown in Fig. A, the nip N is formed between the counter-roll 20 and the variable-crown roll 40. The counter-roll 20 is provided with a mantle 23, to which the axle journals 21a and 21b are permanently attached, by means of which said axle journals the roll is mounted on bearings 22a and 22b so that the bearing spacing is $L_0$. The variable-crown roll 40 is provided with a stationary massive axle 41 and with a revolving mantle 43 mounted on the axle by means of bearings 42a and 42b. Between the axle 41 and the mantle 43, at the nip N, a crown-adjustment arrangement 45 in itself known, e.g. a series of glide shoes or a row of fluid chambers, is fitted. The bearing spacings $L_0$ and $L_1$ of the counter-roll 20 and of the variable-crown roll 40 are dissimilar, and in Fig. A the said differences are denoted with a so that $2 \times a = L_0$ $L_1$. When the counter-roll 20 has an even linear load q, which is produced by means of the forces F, its deflection is caused by the said linear load q and by the moment at its ends. The said moment M at the ends of the bearing spacing $L_1$ of the variable-crown roll 40 is

$$M = F \times a = q \times L_1 \times a/2 \qquad (1)$$

In other words, the said moment M is proportional to the linear load q, so that the form of the deflection line is invariable, and the magnitude of the deflection varies proportionally to the manitude of the load q. The bearings 42a and 42b of the variable-crown roll shown in Fig. A are placed inside the mantle 43. Thereat the force applied to the bearings 42a and 42b does not produce any moment at all on the mantle 43 at the zones facing its bearings 42a,42b, i.e. at the ends of the bearing spacing $L_1$, so that the mantle 43 is not deflected with the same form as the mantle 23 of the counter-roll 20. This is why the caliper profile $CP_A$ of the nip N shown in Fig. A becomes similar to that shown in Fig. C, having two peaks ($CP_1$ and $CP_2$). This drawback is supposed to be avoided by means of the present invention.

Fig. B shows a nip N, which is formed between a prior-art variable-crown roll 50 and a counter-roll 20. The counter-roll 20 is similar to that described in connection with Fig. A. The variable-crown roll 50 is provided with a stationary massive axle 51 and with a mantle 53, at both ends of which there are sleeve-shaped extensions 56a and 56b, in connection with whose outer ends the mantle 53 is journalled by means of bearings 52a and 52b so that the bearing spacings of the variable-crown roll 50 and the counter-roll 20 are equal $= L_0$.

Between the stationary axle 51 and the mantle 53 of the variable-crown roll 50, there is a loading-shoe or loading-chamber arrangement 55 in itself known, by means of which a controlled loading $q_s$ is produced on the inside face of the mantle 53.

The construction shown in Fig. B has its drawbacks, in particular in respect of its frame constructions. Drawbacks are also caused thereby that the plane of effect of the loading or supporting force F applied to the ends of the variable-crown roll 50 will necessarily be located at a considerable distance b from the plane of the bearings 22a,52a and 22b,52b.

By means of the nip N shown in Fig. B, a caliper profile $CP_B$ similar to that shown in Fig. D is effected, which is relatively even so that it has only little "valleys" $CP_1$ and $CP_2$ within the lateral regions of the nip N. The said "valleys" are caused by the weight of the ends of the roll 50.

The object of the present invention is to eliminate the above drawbacks present in the rolls and nips N shown in Figures A and B and to provide a caliper profile of a nip N which is even more even than the profile $CP_B$ shown in Fig. D.

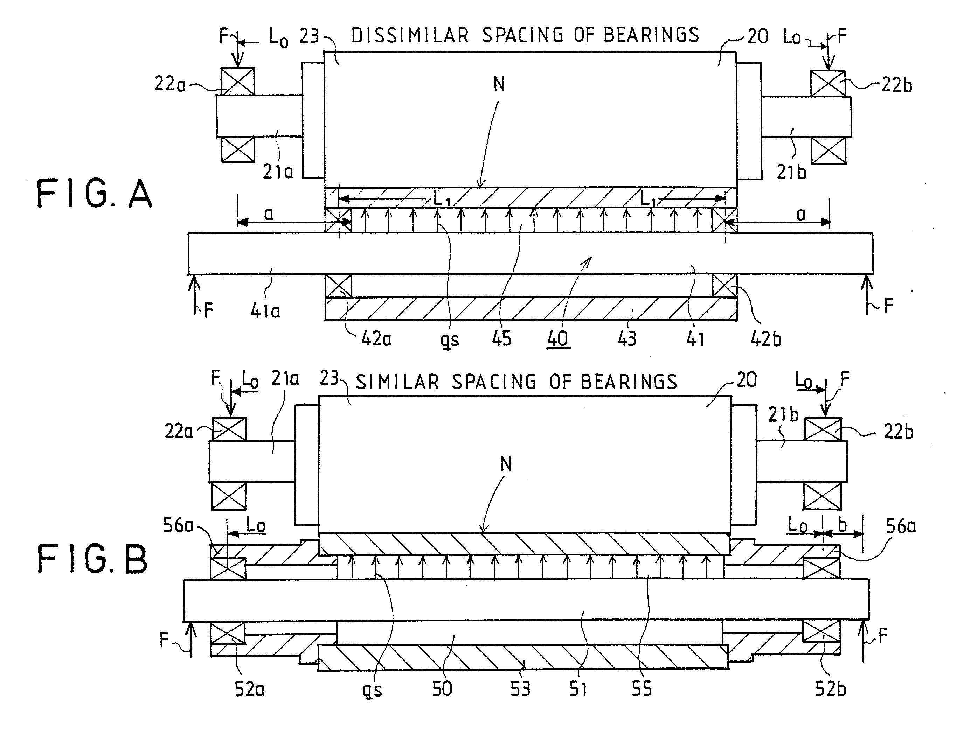

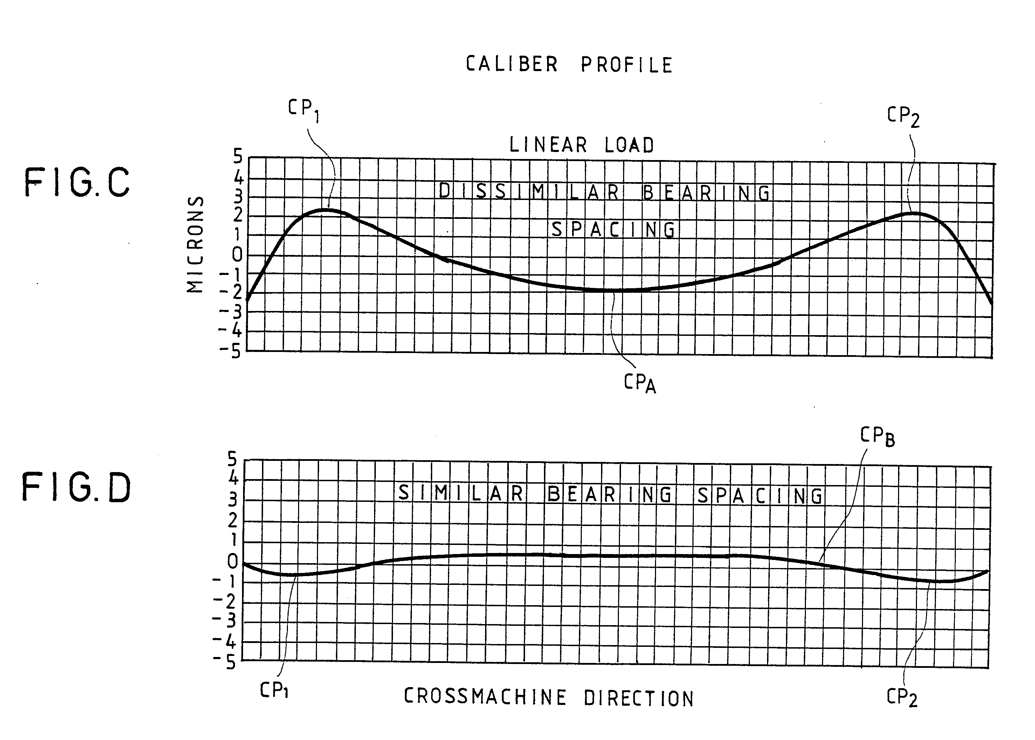

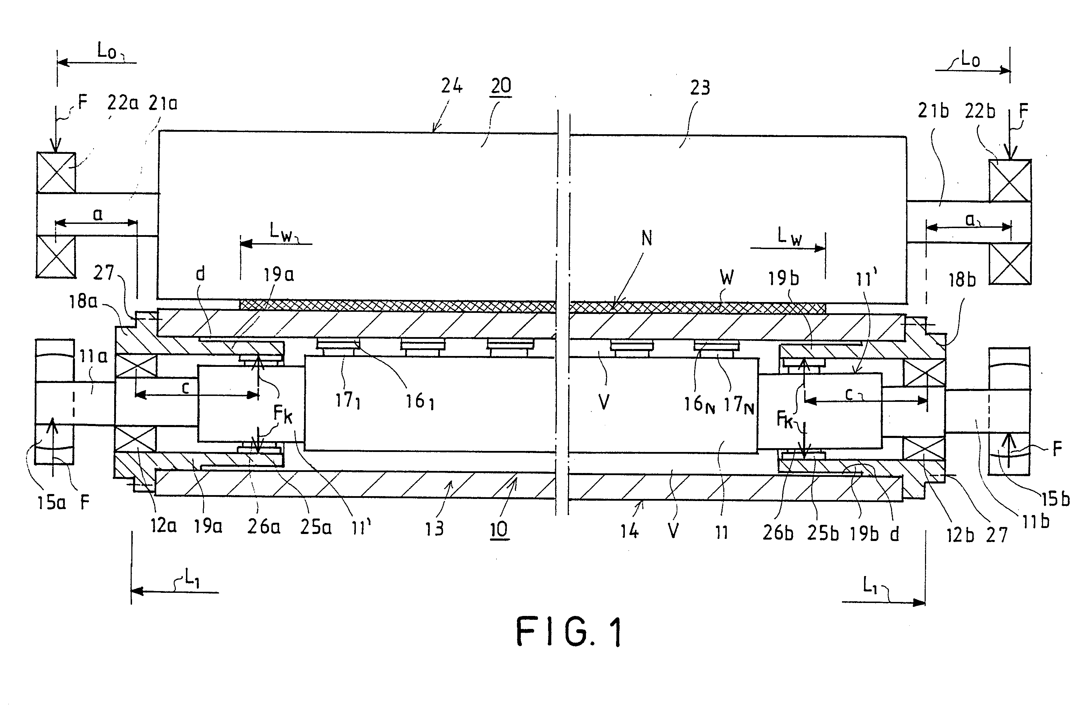

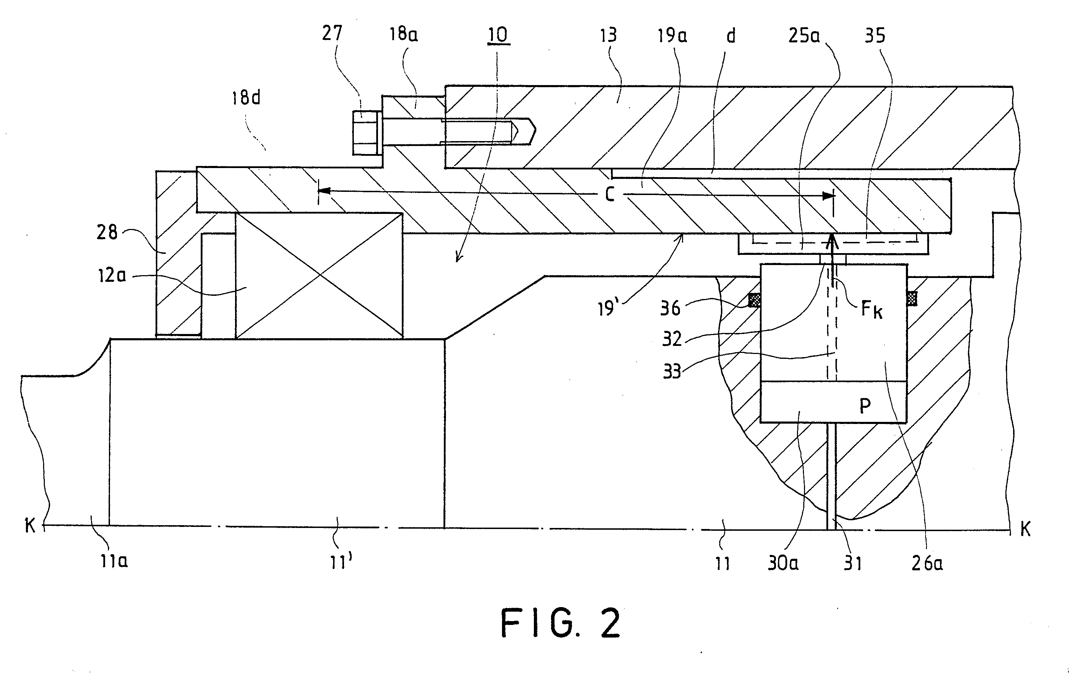

In the following, with reference to Fig. 1, the main principles of the method of the invention and, with reference to Figures 1 and 2, a first exemplifying embodiment of the roll in accordance with the invention will be described.

As is shown in Fig. 1, a nip N, through which a web of a width $L_W$ or a web W and a felt/felts run, is formed between a counter-roll 20 of the sort described above and a variable-crown roll 10 in accordance with the invention. Both the variable-crown roll 10 and the counter-roll 20 have grooved (in connection with grooves there is always a felt) or smooth-faced 14,24 mantles 13,23. The counter-roll 20 is mounted by means of its axle journals 21a and 21b in bearings 22a and 22b, whose bearing spacing is $L_0$. On the bearings 12a,12b there are cover rings 28. With the same spacing $L_0$, the variable-crown roll 10 in accordance with the invention is supported by the end parts 11a and 11b of its stationary central axle 11 in articulation bearings 15a and 15b. The revolving mantle 13 of the variable-crown roll 10 has a bearing spacing $L_1$ shorter than the bearing spacing $L_0$ of the counter-roll, so that $L_0 - L_1 = 2 \times a$.

In the space between the massive central axle 11 and the revolving mantle 13 of the variable-crown roll 10, at the nip N, a series of glide shoes $16_1$ to $16_N$ is fitted, which are loaded by pistons $17_1$ to $17_N$ placed in cylinder bores (not shown) in the axle 11 by means of an adjustable pressure so that the profile of the nip N can be adjusted in ways in themselves known.

According to a first embodiment of the invention, shown in Figure 1 and 2, annular parts 18a and 18b have been attached to both ends of the mantle 13 of the variable-crown roll 10 by means of screws 27, which said annular parts are provided with sleeve parts 19a,19b, which extend into the mantle 13 with a certain play d. In the thinner parts 11' the central axle 11, cylinder bores 30a, 30b are fitted, in which there are pistons 26a,26b provided with seals 36. Glide shoes 25a, 25b are supported by means of articulated joints 32 on the outer faces of the pistons 26a,26b, which said shoes glide against the smooth inner face 19' of the sleeve parts 19a,19b. There are two pistons 26a,26b placed one opposite the other within each part 11' of the axle 11. Thus, there are two pairs of pistons 26. When an adjustable pressure p is passed into the cylinder spaces 30a,30b limited by the pistons 26a,26b through the ducts 31, from which said pressure a lubricating pressure has been passed into the spaces 35 in the glide shoes 25a,25b through the bore 33 in the piston 26a,26b, the said pressure produces compensation forces $F_k$. These forces $F_k$ have a torque arm c relative the vertical centre plane of the bearings 12a,12b. By means of the pressures p in the cylinders 30a,30b, on the roll mantle 13, at both of its end parts placed towards the nip N, facing the nip N, a downwardly bending moment $M_k$ is produced, or an upwardly bending corresponding moment if the counter-roll 20 is deflected towards the nip N by its own weight:

$$M_k = c \times F_k \quad (2)$$

When, by adjusting the pressure p, the moment $M_k$ is adjusted so that the moment M mentioned in the equation (1) is proportional to the moment $M_k$ obtained from the equation (2), the deflection form of the mantle 13 of the variable-crown roll 10 at the nip N is obtained as of the same form as the deflection form of the counter-roll 20. Thus, the caliper profile of the nip N becomes very even, and even more even than, e.g., that shown in Fig. D above.

In respect of the operation of the device in accordance with the invention, Fig. 1 should still be returned to. By the intermediate of the sleeve parts 19a,19b, the compensation forces $F_k$ cause the above compensation moments $M_k$. The force pairs $F_k$ and $F_v$ produce a moment pattern of correct form at the nip N, in which said pattern the moment begins as of full extent right from the point of the roll mantle 13 at which the sleeve part 19a,19b last contacts the inner face of the mantle 13. In the prior-art rolls, the moment pattern corresponding to their ends did not start sharply as of correct magnitude, but the moment increased between the bearing and the first glide shoe linearly from zero to the desired constant moment level.

If two opposite glide-shoe devices 25a,25b are used in both of the sleeve parts 19a,19b, in the way shown in Fig. 1, it should be noticed that the compensation forces $F_k$ above and underneath the axle are, of course, not effective at the same time, in which case they would overrule each other. In Fig. 1, when it is desirable to bend the end parts of the mantle 13 of the roll 10 downwards at the nip N, the upper compensation force $F_k$ is adjusted so as to act upon the upper glide shoe 25a,25b. On the other hand, when the end parts of the mantle 13 of the roll 10 are to be bent upwards, correspondingly the glide shoe 25a,25b placed underneath the axle 11 is acted upon by the force $F_k$.

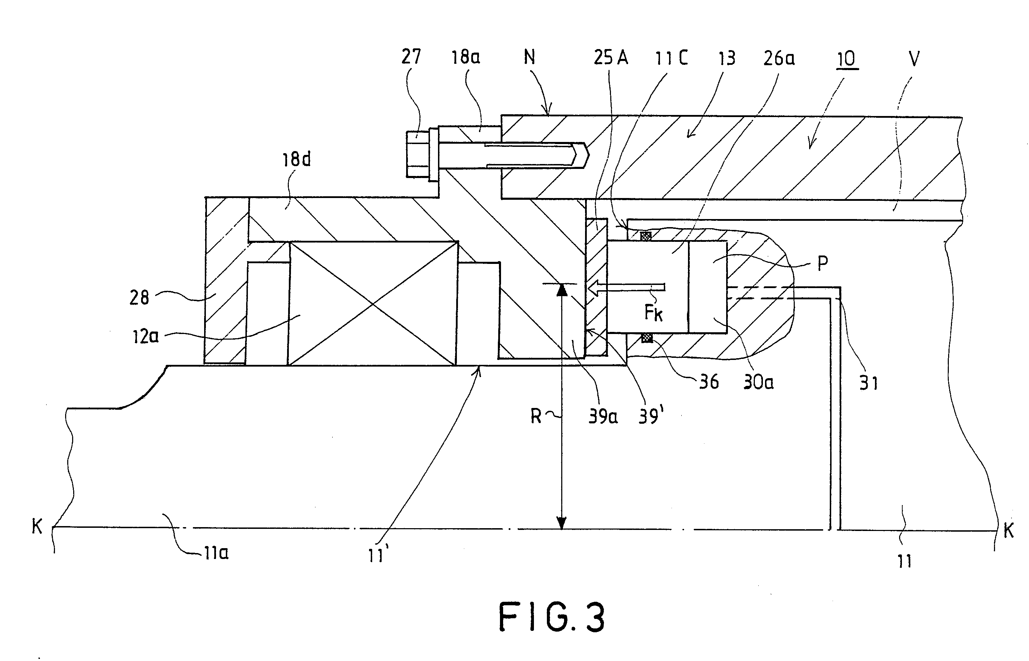

As is shown in Figures 1 and 2, the force $F_k$ causing the moment $M_k$ is directed in the radial plane of the variable-crown roll 10. The invention may also be accomplished so that the said compensation force is applied in the axial direction of the variable-crown roll 10, which solution is shown in Fig. 3. It should also be stated that the compensation force $F_k$ may be applied in a direction between the axial direction and the radial direction. According to Fig. 3, annular parts 18a,18b have been attached to both ends of the mantle 13 of the variable-crown roll 10 by means of screws 27. (The annular part 18b, which is at the other end, is not shown). The annular parts 18a,18b are provided with outwardly directed sleeve parts 18d, which support the mantle 13 on the bearings 12a and 12b. The annular parts 18a,18b are provided with a radial flange part 39, against whose

smooth inner face 39' a glide shoe 25A acts. A corresponding shoe arrangement is provided in the plane of the nip N at the opposite side of the axle 11, so that one variable-crown roll 10 is provided with two pairs of pistons 26A,26B and glide shoes 25A,25B, in accordance with the principle shown in Fig. 1. The pistons 26A,26B are placed in cylinder bores 30a opening in the plane 11c of the axle 11. An adjustable pressure p is passed into the cylinders 30a,30b through the ducts 31, by means of which said pressure p, in this case axial, compensation forces $F_k$ are produced. With the said compensation forces $F_k$ the moment bending the ends of the mantle 13 of the roll 10 is

$$M_k = F_k \times R, \quad (3)$$

wherein R = distance from the centre line K-K of the axle 11.

In the other respects, the construction is similar to that described above in relation to Figures 1 and 2.

In the following, the patent claims will be given, whereat the various details of the invention may show variation within the scope of the inventive idea defined in the said claims.

**Claims**

1. Method for the unification of the form of the deflection lines of the roll mantles (13,23) at the nip (N) formed by an adjustable-crown roll (10) with its counter-roll (20), the bearing spacing ($L_0$) of the said counter-roll (20) being substantially larger than the corresponding bearing spacing ($L_1$) of the adjustable-crown roll (10), and the load in the nip (N) between the said rolls (10,20) being produced by means of load forces (F) which are preferably effective facing the bearings (22a, 22b) of the counter-roll (20), **characterized** in that in the method, by means of devices fitted inside the bearing spacing ($L_1$) of the mantle (13) of the adjustable-crown roll (10) and inside the mantle (13), a compensation moment ($M_k$) is produced which loads both of the end regions of the roll mantle (13), the magnitude of the said moment ($M_k$) being arranged by means of a compensation force ($F_k$) such that the roll mantles (13,23) will have substantially uniform deflection lines at the nip (N) between the counter-roll (20) and the adjustable-crown roll (10).

2. Method as claimed in claim 1, **characterized** in that the said compensation force ($F_k$) acts upon components (19a,19b) fitted inside the mantle (13) of the adjustable-crown roll (10) substantially in the direction of the radial plane of the roll (10) and that the said compensation force ($F_k$) has a certain torque arm (c) relative the planes of the bearings (18b) placed facing the ends of the mantle (13) of the adjustable-crown roll (10) (Figs. 1 and 2).

3. Method as claimed in claim 1, **characterized** in that the said compensation force ($F_k$) is produced by means of members fitted within the bearing spacing ($L_1$) so that the direction of

the said force ($F_k$) is substantially parallel to the axial direction of the adjustable-crown roll (10) and that the said axial compensation force ($F_k$) has a certain torque arm (R) relative the centre line (K-K) of the central axle (11) of the adjustable-crown roll (10).

4. Method as claimed in claim 1, **characterized** in that the direction of the said compensation force is between the radial direction and the axial direction of the adjustable-crown roll (10).

5. Method as claimed in any of the claims 1 to 4, **characterized** in that the said compensation force has been produced by means of hydraulic piston-glide-shoe arrangements, which are fitted so as to act between the non-revolving central axle (11) of the adjustable-crown roll (10) and the glide face (19'; 39') of a projection part (19a,19b;39a,39b) fitted inside the roll mantle (13), and that the said compensation force ($F_k$) is arranged settable or adjustable by means of selection or adjustment of the pressure (p) in the said hydraulic loading members.

6. Adjustable-crown roll (10) making use of a method as claimed in any of the claims 1 to 5, which said roll comprises a massive central axle (11) and a roll mantle (13) arranged revolving on the said axle, a glide-shoe-loading-piston device ($16_1$-$16_N$, $17_1$-$17_N$) or a corresponding pressure-fluid chamber or a row of same being fitted in the space (V) between the said central axle (11) and the said mantle (13), by means of which said glide-shoe-piston device or equivalent it is possible to adjust the profile of the nip (N) formed by the said roll (10) with its counter-roll (20) and which said glide-shoe-piston device or equivalent is fitted at the plane of the said nip (N) and which said roll mantle (13) is journalled revolving at the proximity of both of its ends by means of bearings (12a,12b) on the said stationary axle (11), and which said stationary axle (11) is supported from outside the journalling points of the roll mantle (13) by means of articulation bearings (15a,15b), **characterized** in that annular parts (18a,18b) are attached to both ends of the said roll mantle (13), which said annular parts are provided with a sleeve-shaped (19a) or ring-flange-shaped (39a) projection part, a glide shoe device or glide shoe devices (25a,25;25A,25B) placed at opposite sides of the roll axle (11) being fitted as acting upon the glide face (19';39') of the said projection part, and that the said glide shoe devices (25) are arranged so as to be loaded by means of a cylinder-piston combination or equivalent, which is fitted so as to act between the said glide shoe (25) and the said central axle (11).

7. Adjustable-crown roll as claimed in claim 6, **characterized** in that the said annular parts (18a,18b), which are attached to the ends of the roll mantle (13), preferably by means of screw joints (27), are provided with sleeve-shaped parts (19a,19b), which are substantially coaxial

**0 241 442**

with the roll mantle (13), which have a considerable axial extension (c), and whose outer radius is somewhat smaller than the inner radius of the roll mantle (13), that inside the said sleeve part (19a,19b), a glide face (19′) is provided, against which said glide face opposite pairs of glide shoes (25a,25b) placed in the plane of the nip (N) act, that the said glide shoes (25a,25b) are loaded by pistons (26a,26b) in substantially radial cylinder bores (30a,30b) in the central axle, preferably by means of an articulated joint (32), so that the load forces ($F_k$) produced by means of the said pistons (26a,26b) have a certain torque arm (c) relative the centre plane of the bearings (12a,12b) of the roll mantle (13).

8. Adjustable-crown roll as claimed in claim 6, **characterized** in that annular parts (18a,18b) are attached to the ends of the roll mantle (13), preferably by means of screw joints (17), which said annular parts have a substantially radial ring-flange part (39a,39b) extending into the roll mantle (13), the inner face (39′) of the said ring-flange part being formed as a glide face, against which a glide shoe or pairs of glide shoes (25A,25B) act, that the said glide shoes (25A,25B) are loaded by hydraulic pistons (26a,26b), which are fitted in axial cylinder bores (30a,30b) placed in the central axle (11) or in a stationary part connected to the said axle, so that by means of the said cylinders (26a,26b), compensation forces ($F_k$) are produced, which are applied substantially in the axial direction of the roll (10) and which have a certain torque arm (R) relative the centre line (K-K) of the central axle (11) of the roll (10).

9. Adjustable-crown roll as claimed in claim 8, **characterized** in that the said cylinder bores (30a,30b) are fitted so as to open outwards from the step parts (11c) of the central axle (11).

10. Adjustable-crown roll as claimed in any of the claims 6 to 9, **characterized** in that the said annular parts (18a,18b) are provided with a sleeve part (18d) directed outwards from the roll mantle (13), in whose interior the bearings (12a,12b) of the roll mantle (13) are fitted on the part (11′) of the central axle (11).

FIG. A — DISSIMILAR SPACING OF BEARINGS

FIG. B — SIMILAR SPACING OF BEARINGS

CALIBER PROFILE

**FIG.C**

LINEAR LOAD

DISSIMILAR BEARING SPACING

MICRONS

$CP_1$

$CP_2$

$CP_A$

5 4 3 2 1 0 -1 -2 -3 -4 -5

**FIG.D**

SIMILAR BEARING SPACING

$CP_B$

$CP_1$

$CP_2$

CROSSMACHINE DIRECTION

5 4 3 2 1 0 -1 -2 -3 -4 -5

FIG. 1

FIG. 2

FIG.3